# EUROPEAN PATENT SPECIFICATION

(11) **EP 1 067 562 B1**
(45) Date of publication and mention of the grant of the patent: **29.09.2004**
(21) Application number: 00114039.1
(22) Date of filing: 05.07.2000
(51) Int. Cl.: H01B 13/32, H01B 13/012

(54) **An application method and an applicator for use in connection with such a method**
Auftragungsverfahren und Auftragevorrichtung zur Verwendung nach diesem Verfahren
Méthode d' application et applicateur pour être utilisé en liaison avec une telle méthode

(30) Priority: 06.07.1999 JP 19213399
(43) Date of publication of application: 10.01.2001
(73) Proprietor: Sumitomo Wiring Systems, Ltd., Yokkaichi-City, Mie, 510-8503 (JP)
(72) Inventor: Chujo, Hisato, Sumitomo Wiring System, Ltd., Yokkaichi-city, Mie 510-8503 (JP); Abe, Koshi, Sumitomo Wiring System, Ltd., Yokkaichi-city, Mie 510-8503 (JP); Baba, Hirotaka, Sumitomo Wiring System, Ltd., Yokkaichi-city, Mie 510-8503 (JP); Uchiyama, Kenichi, Sumitomo Wiring System, Ltd., Yokkaichi-city, Mie 510-8503 (JP)
(74) Representative: Müller-Boré & Partner Patentanwälte

(56) References cited:
- DE-A- 19 508 002
- US-A- 4 568 400
- PATENT ABSTRACTS OF JAPAN vol. 1998, no. 13, 30 November 1998 (1998-11-30) & JP 10 209652 A (SUMITOMO WIRING SYST LTD), 7 August 1998 (1998-08-07)

## Description

The present invention relates to an application method, in particular to a method of waterproofing applied to a group of wires of a wiring harness or an auxiliary assembly forming the wiring harness (hereinafter, collectively referred to as wire assembly") for an automotive vehicle when a grommet is mounted on the group of wires, and also to an applicator, in particular to a sealant applicator used in connection with such a method.

For example, in the case that an automotive wire assembly is introduced through a panel partitioning an engine compartment and a passenger compartment of an automotive vehicle, a tubular rubber grommet is fitted in a through hole formed in the panel and then the wire assembly is introduced through a hole of the grommet in order to prevent intrusion of water into the passenger compartment. However, if there are clearances between the respective wires of the wire assembly or between the respective wires and the grommet in a portion of the wire assembly located in the hole of the grommet, water may intrude through these clearances by capillary action.

A waterproofing treatment such as filling of a sealant in the clearances inside the grommet has been applied between the grommet and the respective wires of the wire assembly. However, such a waterproofing treatment is not necessarily easy.

Another waterproofing method is such that sealant is applied to the respective wires, the wires are wrapped around by a film and bundled to have a circular cross section by taping when the wire assembly is manufactured, and the bundled wires are fitted into the grommet. Since waterproofing can be applied using the sealant when the wire assembly is manufactured according to this method, a waterproofing process can be simplified and speeded up. The aforementioned sealant is, for example, applied as follows. A plurality of wires forming a wire assembly are aligned in a line, a plurality of nozzles are provided at the opposite sides of this wire group, and a sealant is discharged from these nozzles at once to be applied onto the opposite sides of the wire group (see, for example, Japanese Unexamined Patent Publication No. 10-172360). The above nozzles are provided in a holder extending along the opposite sides of the wire group. The holder is formed to have a substantially U-shape, and the nozzles are provided at the opposite sides of the wires to oppose to each other and fixed to have a constant spacing between those at the opposite sides. The nozzles are arranged along the opposite sides of the wire group in a direction in which the wires are aligned, so that the sealant can be applied to the opposite sides of the wire group at once.

If the nozzles thus arranged are used for an actual wire assembly, there are cases where the sealant cannot be uniformly applied in a specified thickness. This is because there are thicker and thinner wires in the wire assembly. Thus, if the aforementioned constant spacing between the opposed nozzles is set at a value suitable for the thicker wires, clearances between the thinner wires and the nozzles are larger than a suitable value. As a result, if an attempt is made to securely apply the sealant also to the thinner wires, the sealant is discharged from the nozzles for a long time, which causes thick layers of the sealant on the thicker wires. Conversely, if an attempt is made to properly apply the sealant to the thicker wires, the sealant cannot be securely applied to the thinner wires. In any case, the thickness of the sealant cannot be uniform as a whole.

There are actually various specifications of wire assemblies depending on the types of automotive vehicles. The aforementioned fixed nozzles cannot cope with various specifications.

An object of the present invention is to solve the aforementioned technical problem and to provide an application method which can be carried out when a wire assembly is manufactured and can securely apply a material, in particular sealant in a substantially uniform thickness in accordance with the specification of the wire assembly, and to provide an applicator, in particular a sealant applicator used for this purpose.

This object is solved according to the invention by an application method according to claim 1 and by an applicator according to claim 6. Preferred embodiments of the invention are subject of the dependent claims.

According to the invention, there is provided an application method for applying a material, in particular a sealant having a specified (predetermined or predeterminable) viscosity to wires of a wire assembly, comprising the steps of:
aligning or positioning portions of wires of a wire group substantially in a wire aligning direction or laterally with respect to each other or substantially side by side;
substantially opposing a pair of nozzles for discharging the material to each other to hold or position the substantially aligned wire group therebetween, and
moving the nozzles in the wire alignment direction while changing a spacing between the pair of nozzles according to the diameters of the wires so as to cause the material to be applied to or to coat and/or to penetrate between the wires.

According to a preferred embodiment, in the aligning step the wires are aligned according to their diameter such that the diameter thereof increases in the wire alignment direction.

Preferably, when the nozzles reach a position along the wire alignment direction corresponding to a clearance between adjacent wires, the spacing or distance between the nozzles is reduced in the moving step and/or the feeding or discharge of material, in particular sealant is reduced or preferably stopped.

Further preferably, the discharge or feeding amount of material is changed by increasing/decreasing
the moving speed of the nozzles along the wire alignment direction and/or
the discharging speed of the material.

Most preferably, the method is used as a waterproofing method for a wire assembly to be introduced into a grommet, wherein during the manufacturing of the wire assembly, a sealant having a specified viscosity is applied to a wire group obtained by substantially aligning a plurality of wires forming the wire assembly substantially side-by-side, a portion of the wire group to which the sealant is applied is wrapped around by a film in such a manner that the wrapped wire group has a substantially circular cross section and taping is at least partly applied to the outer surface of the film. According to a further preferred embodiment, there is provided a waterproofing method for a wire assembly to be introduced into a grommet according to which method, during the manufacturing of the wire assembly, a sealant having a specified viscosity is applied to a wire group obtained by aligning a plurality of wires forming the wire assembly side-by-side, a portion of the wire group to which the sealant is applied is wrapped around by a film in such a manner that the wrapped wire group has a circular cross section and taping is applied to the outer surface of the film,
wherein, when the sealant is applied to the wire group,
the wires of the wire group are aligned;
a pair of nozzles for discharging the sealant are opposed to each other to hold the aligned wire group therebetween, and
the nozzles are moved in a wire alignment direction while a spacing between the pair of nozzles is changed according to the diameters of the wires so as to cause the sealant to penetrate between the wires.

With this method, by moving the pair of nozzles in the wire alignment direction while causing them to discharge the sealant, the sealant can be simultaneously applied to the opposite sides of an area extending over the plurality of wires while penetrating between the wires. Since such a waterproofing treatment is applied during the manufacturing of the wire assembly, the waterproofing process can be simplified and speeded up.

Particularly, since the spacing between the pair of nozzles can be adjusted according to the diameters of the wires, a variation of the clearances between the nozzles and the respective wires when the nozzles are moved in the wire alignment direction can be reduced. As a result, the material, in particular the sealant can be uniformly applied to the entire opposite sides of the wire group in a uniform thickness. Further, wire groups made of wires having different diameters can be coped with.

According to the invention, there is further provided an applicator in particular for use in connection an application method according to the invention, comprising;
a pair of nozzles which are or can be substantially opposed to each other at the opposite sides of a holder for holding or positioning a wire group obtained by substantially aligning or laterally disposing portions of a plurality of wires in a wire alignment direction, the nozzles being provided for discharging a material, in particular a sealant having a specified (predetermined or predeterminable) viscosity,
a moving mechanism for moving the pair of nozzles in the wire alignment direction,
a feeding mechanism for feeding the material to the nozzles such that a specified amount of the material is discharged from the nozzles, and
a relatively moving means for moving the nozzles toward and away from each other or relative to each other such that the spacing between the pair of nozzles corresponds to the diameter of the wire(s) held therebetween.

According to a further preferred embodiment, there is provided a sealant applicator used in connection with the waterproofing method according to claim 1, comprising;
a pair of nozzles which are opposed to each other at the opposite sides of a wire group obtained by aligning a plurality of wires for discharging a sealant,
a moving mechanism for moving the pair of nozzles in a wire alignment direction,
a feeding mechanism for feeding the sealant to the nozzles such that a specified amount of the sealant is discharged from the nozzles, and
a relatively moving means for moving the nozzles toward and away from each other such that the spacing between the pair of nozzles corresponds to the diameter of the wire held therebetween.

With this applicator, in particular sealant applicator, the pair of nozzles are moved in the wire alignment direction while the spacing therebetween is changed according to the diameters of the wires. During that time, the specified amount of material, in particular of sealant can be discharged from the nozzles.

Preferably, the holder is formed such that the plurality of the wires are aligned substantially in the order of their diameters in the wire group and preferably that the wires having the smallest diameter are arrangeable at the bottommost position as seen in a direction of insertion of the wires into the holder.

Further preferably, plurality of the wires are aligned substantially in the order of their diameters in the wire group, wherein the the pair of nozzles are moved while tightly holding the wire arranged or positioned or held in the holder therebetween.

With this construction, since the pair of nozzles hold the wire group in the holder, the aforementioned spacing with the nozzles and each wire can be easily and securely minimized despite the flexibility of the wires and the sealant applicator is allowed to have a simple construction.

Further, since the wires are aligned in the order of their diameters, the nozzles are easily accessible to the respective wires. This is because, if a thinner wire is aligned between thicker wires, it may be difficult for the nozzles to approach this thinner wire. Accordingly, the variation of the above clearance can be reduced, which is preferable to uniformly apply the sealant.

Here, the alignment according to the diameters of the wires includes, for example, an alignment of wires having only slightly different diameters regardless of their diameters in addition to an alignment of wires from the thickest one to the thinnest one.

Further preferably, the pair of nozzles are controlled such that they stop discharging the material, in particular the sealant at a predetermined timing corresponding to a clearance between the wires of the wire group while being moved along the wire alignment direction by the moving mechanism.

With this construction, if there is a clearance between the plurality of aligned wires, the discharge of the sealant can be stopped when the nozzles are located at this clearance.

Most preferably, the feeding mechanism comprises:
at least one cartridge including a tube containing the material, in particular sealant as a supply source of the material or sealant, an outlet provided at one end of the tube for discharging the material or sealant therethrough, and a bottom lid which is movable inside the tube substantially along the longitudinal direction of the tube when being pushed from the other end of the tube to discharge the material or sealant,
a mount portion to and from which one end of the cartridge is attached and detached by moving the cartridge preferably substantially along its longitudinal direction,
a pushing bar one end of which can come into contact with the bottom lid of the cartridge attached to the mount portion,
a movable member which is attachable and detachable to and from the other end of the pushing bar and is movable substantially along the longitudinal direction of the cartridge, and preferably
a permanent magnet for creating such a magnetic attraction as to hold the other end of the pushing bar in or on the movable member.

With this construction, when the cartridge is attached or detached, the movable member is moved away from the mount portion and the pushing bar is detached from the movable member. In this state, the cartridge can be easily attached or detached without being interfered by the pushing bar.

After the attachment of the cartridge, the pushing bar is held by the movable member and the movable member is moved toward the mount portion. Then, the bottom lid of the cartridge is pushed by the pushing bar, thereby causing the material or sealant to discharge through the outlet of the cartridge.

Further, by utilizing a magnetic attraction of the magnet to hold the pushing bar, the pushing bar can be easily attached to and detached from the movable member only by arranging the other end of the pushing bar at the movable member.

These and other objects, features and advantages of the present invention will become apparent upon a reading of the following detailed description and accompanying drawings in which:
FIG. 1 is a schematic side view showing a sealant applicator according to one embodiment of the invention, a wire laying board and other parts in their used states,
FIG. 2 is a partial section of a holder shown in FIG. 1,
FIG. 3 is a perspective view showing the holder shown in FIG. 2 and a wire group held by the holder in a state where a sealant is applied,
FIG. 4 is a perspective view partly in section showing the sealant applicator shown in FIG. 1,
FIG. 5 is a side view of the sealant applicator shown in FIG. 4,
FIG. 6 is a front view of the sealant applicator shown in FIG. 1,
FIGS. 7(a) to 7(f) are diagrams showing an inventive waterproofing method step by step,
FIGS. 8(a) to 8(d) are side views showing the holder, nozzles, the wire group to explain an operation of the sealant applicator shown in FIG. 1,
FIG. 9 is a side view showing the holder, the nozzles, the wire group to explain another operation of the sealant applicator shown in FIG. 1,
FIG. 10 is a timing chart of the operation shown in FIG. 9, and
FIGS. 11(a) to 11(g) are diagrams showing a cartridge exchanging operation in the sealant applicator shown in FIG. 1.

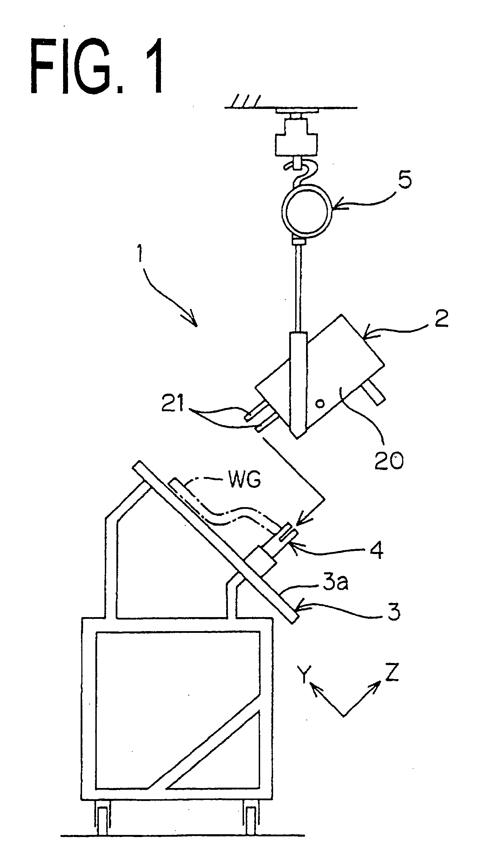

Next a sealant applicator is described as an example of an embodiment of an inventive applicator. However, it should be understood that not only a sealant may be used as a material to be dispensed by the applicator but any other material which is to be applied to wires and/or introduced into clearances between adjacent wires. Other materials could be e.g. glue, resin; conductive material, vibration dampening material, etc. A sealant applicator (hereinafter, merely "applicator") according to one embodiment of the invention is described with reference to the accompanying drawings. FIG. 1 is a side view showing the schematic construction of an applicator in its used state.

The applicator 1 is comprised of a main unit 2 which is suspended e.g. from the ceiling via a balancing or suspension mechanism 5, a wire laying board 3 located substantially below the main unit 2 for holding an entire wire group WG, and a holder 4 provided on the wire laying board 3 for holding a waterproofing or sealing or connecting or application area of the wire group WG. Wires are or can be laid on the wire laying board 3 to form a wire assembly, and the entire wire assembly is held on the wire laying board 3. The holder 4 is also used to hold or position the wire group WG in a specified position when the wire assembly is manufactured.

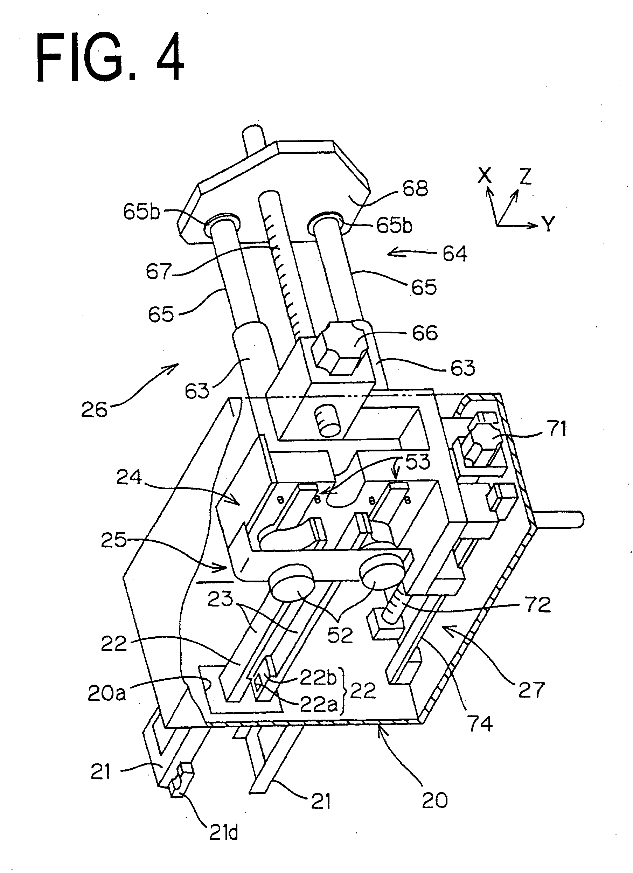

In the applicator 1, the wire group WG is held or positioned by the holder 4, the main unit 2 is manually brought and positioned in proximity to the holder 4 and the sealant having a specified (predetermined or predeterminable) viscosity is applied to the specified position of the wire group WG held by the holder 4 from nozzles 22 (see FIG. 4) of the main unit 2. The viscosity may be chosen such that the material, preferably the sealant may be discharged from the nozzles 22 and may be attached or adhered to the surface of the wires, preferably without dripping therefrom.

In the present invention, a plurality of wires W are preferably aligned substantially in a line in the holder 4, and the sealant is continuously applied to the wires W along a wire alignment direction by the main unit 2.

Hereafter, the applicator 1 is described in more detail.

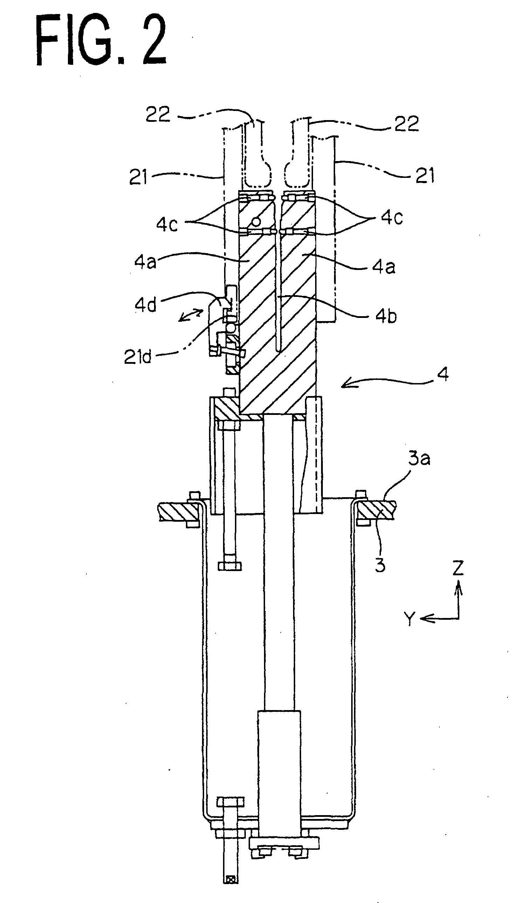

The holder 4 is projectably and retractably provided in a direction at an angle different from 0° or 180°, preferably substantially normal to a surface 3a of the wire laying board 3 as shown in FIG. 2. The holder 4 can lift the wire group WG from the surface 3a when projecting from the surface 3a (state shown in FIG. 2). The sealant is applied in this state. The holder 4 releases the wire group in a position proximate to the surface 3a.

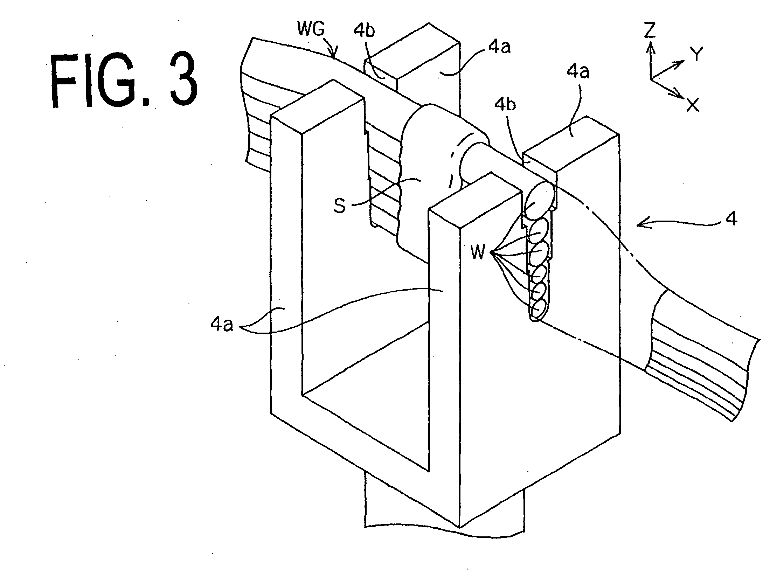

The holder 4 has two pairs of opposing members 4a. Each pair of the opposing members 4a extend in the direction at an angle different from 0° or 180°, preferably substantially normal to the surface 3a of the wire laying board 3, thereby defining a groove 4b between the opposing members 4a to hold or position the wire group WG therein. As shown in FIG. 3, the respective pairs of the opposing members 4a are spaced apart by a specified (predetermined or predeterminable) distance in the extension of the wires, and a waterproofing area for the wire group WG is defined in this spacing, and the sealant S is preferably applied in this area.

Each groove 4b substantially extends in the direction (depth direction, see an arrow Z) at an angle different from 0° or 180°, preferably substantially normal to the surface 3a of the wire laying board 3, and an end thereof distal from the surface 3a along the depth direction is open. Each groove 4b is also open in a direction of extension of the wires W, preferably in a direction substantially parallel to the surface 3a which direction is the extension of the wires W. A width of the groove 4b differs stepwise along the depth direction, i.e. it is wider toward the entrance of the groove 4b. The wires W are aligned one by one in the depth direction of the groove 4b in such a manner that thinner wires are located at the bottom side and thicker wires are located at the entrance side. Ball plungers 4c are provided near the entrance of the groove 4b and at a boundary between the narrower part and the wider part of the groove 4b. Balls provided at the leading ends of the ball plungers 4c are elastically biased to project into the groove 4b, thereby positioning and/or preventing the wires located below the balls from inadvertently coming out.

The main unit 2 is, as shown in FIG. 1, comprised of a suspended frame 20 which forms the outer configuration of the main unit 2, and a pair of positioning members 21 for positioning the frame 20 with respect to the holder 4. As shown in FIG. 2, the pair of positioning members 21 are spaced apart from and opposed to each other, and the holder 4 is at least partly fitted or inserted substantially in between the positioning members 21 to introduce the wires W. In this state, a recess-shaped hook portion 21d provided on the positioning member 21 and a hook portion 4d provided on the holder 4 are engaged or engageable with each other to hold or lock the positioning member 21 and the holder 4 locked into each other. Preferably bearing guide rollers (not shown) are provided on and/or along the positioning member 21 for reducing a friction and/or abrasion between the positioning member 21 and the holder 4 to be at least partly positined therebetween.

The following description is made based on a state where the main unit 2 and the holder 4 are locked into each other, It should be noted that the direction in which the wires W are aligned is referred to as an application direction or a wire alignment direction (arrow Z); the extension of the wires W a wire direction (arrow X); and a direction which is normal to the wire direction and the application direction and in which the wires W are held a holding direction (arrow Y) and that these arrows are shown in the respective drawings if necessary.

The frame 20 is preferably substantially box-shaped as shown in a perspective view of FIG. 4, and has an opening 20a in one surface thereof. The aforementioned positioning members 21 extend substantially side by side in the holding direction near the periphery of the opening 20a. A pair of nozzles 22 for discharging the sealant or other preferably viscous material are so provided as to face the opening 20a. The nozzles 22 are opposed to each other substantially in the holding direction, and are respectively provided at the leading ends of a pair of arms 23. The other ends of the respective arms 23 are movably and/or rotatably supported on a movable element 24, which is provided with a relatively moving mechanism 25 for moving and/or rotating the other ends of the arms 23 toward and away from each other. Accordingly, a spacing between the nozzles 22 can be changed by widening and narrowing a spacing between the leading ends of the arms 23. The movable element 24 is provided with a feeding mechanism 26 for feeding the sealant or other material to the pair of the nozzles 22. A moving mechanism 27 for moving the movable element 24 is provided in the frame 20.

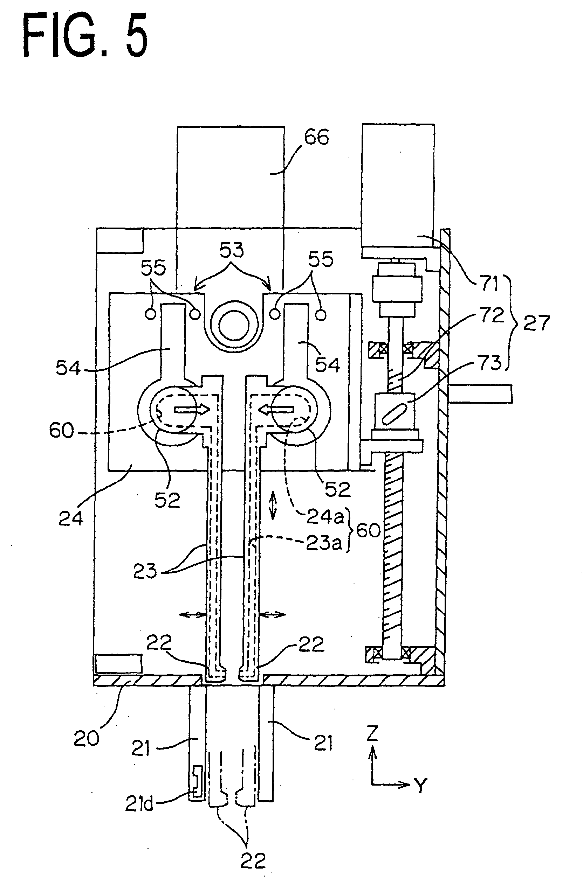

The moving mechanism 27 is, as shown in FIGS. 4 and 5, comprised of a motor 71 as a driving source secured to the frame 20, a ball screw 72 coupled to a shaft of the motor 71 to be driven thereby and extending in the application direction (Z), a nut 73 screwed onto the ball screw 72 and fixed to the movable element 24, and a direct-acting bearing 74 for movably bearing the movable element 24 along the application direction. The moving mechanism 27 moves the feeding mechanism 26, the relatively moving mechanism 25, the pair of arms 23 and the nozzles 22 together with the movable element 24. The moving mechanism 27 can cause the leading ends of the arms 23 to project out of the frame 20 through the opening 20a by moving the movable element 24 in the application direction (Z) and also can move the nozzles 22 along the wire aligning direction (Z) while the leading ends of the arms 23 are projecting out of the frame 20 (this state is shown in phantom line in FIG. 5).

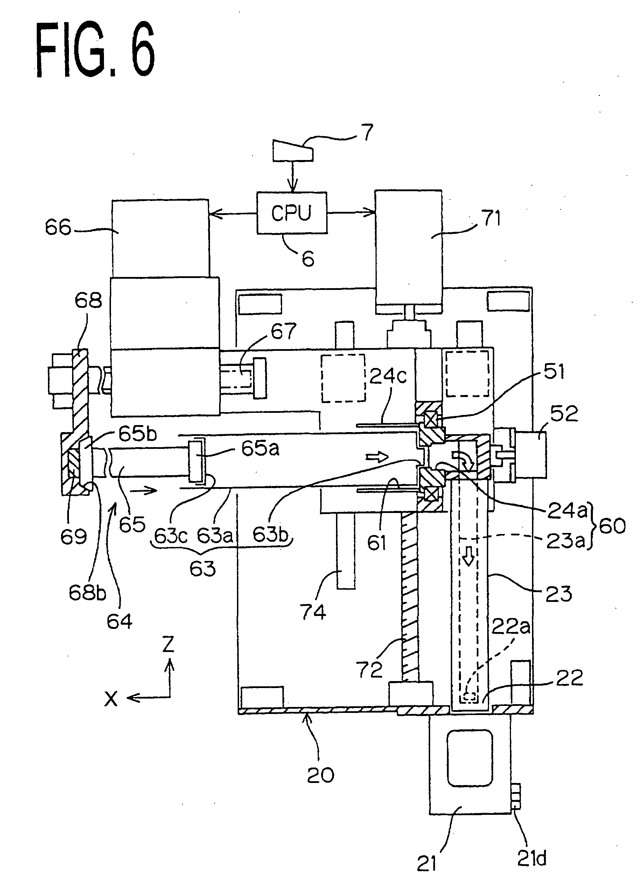

The relatively moving mechanism 25 is comprised of bearings 51 (see FIG. 6) for rotatably bearing the other ends of the arms 23 about a center axis of rotation extending along the wire direction X, air-pressure actuators 52 as a driving source or actuating means for rotating or pivoting the arms 23 and restricting mechanisms 53 for restricting angles of rotation of the arms 23. Alternatively or additionally to the air pressure actuators 52 also one or more step motors or other actuating means may be used to rotate or pivot the arms 23. Each restricting mechanism 53 includes an arm member 54 provided at the other end of the corresponding arm 23 and a pair of pins 55 provided on the movable element 24. The opposite sides of the arm member 54 come into contact with the pins 55 at the opposite ends of a rotatable range of the corresponding arm 23. The above parts are provided for each of the arms 23. Even though the air pressure actuator 52 is shown to be positioned in a spaced relationship with respect to the restricting mechanism 53 along its axis of rotation, it may be alternatively provided laterally thereto, i.e. the air pressure actuator 52 is provided in a spaced relationship in a radial direction with respect to the axis of rotation of the restricting mechanism 53. In other words, the air pressure actuator 52 and the restricting mechanism 53 may be provided on substantially the same plane adjacent to each other.

In the relatively moving mechanism 25, the respective air-pressure actuators 52 bias the arms 23 in opposite rotating directions. Biasing forces substantially constantly act in directions closing the arms 23 (directions bringing the nozzles 22 closer to each other). When the sealant is discharged from the nozzles 22, the respective nozzles 22 and the respective wires can be spaced apart by a substantially constant distance even if the wires W have different diameters by balancing a pressure at which the sealant is discharged and the aforementioned biasing forces. As a result, the sealant can be substantially uniformly applied to the wires W in a specified thickness.

Each arm 23 has a substantially hollow structure so that the sealant can be introduced to the corresponding nozzle 22, and an internal chamber 23a of the arm 23 substantially communicates with a hole 24a (see FIG. 6) formed in the movable element 24 and the nozzle 22 at the leading end of the arm 23.

Each nozzle 22 includes one discharging opening 22a through which the sealant is discharged and a guide portion 22b which is formed in vicinity of the discharging opening 22a and can at least partly extend along the wires W. The discharging openings 22a and the guide portions 22b of the respective nozzle 22 are opposed to each other.

Each guide portion 22b is integrally formed with a member forming the periphery of the corresponding discharging opening 22a, and includes a portion located at the periphery of the discharging opening 22a and extending substantially parallel to the wire direction and the application direction (Z), and a portion located more toward the other end of the arm 23 than the discharging opening 22a and inclined along the application direction (Z).

The discharging opening 22a preferably has a substantially rectangular shape which is long in the wire direction, and a longitudinal dimension thereof is set at the length of the waterproofing area.

The feeding mechanism 26 includes, as shown in FIG. 6, feeding paths 60 comprised of the inner chambers 23a of the arms 23 and the holes 24a of the movable element 24, recess-shaped mount portions 61 each located at an end or end portion of the corresponding feeding path 60 for detachably mounting one end of a corresponding cartridge 63, and an extruding mechanism 64 for extruding the sealant or other material from the cartridges 63 attached to the mount portions 61 to the feeding paths 60. The feeding path 60, the mount portion 61, the cartridge 63, etc. are preferably provided for each of the pair of nozzles 22, whereas an essential portion of the extruding mechanism 64 are used for the both nozzles 22.

Each cartridge 63 includes a tube 63a accommodating the sealant or other extrudable or applicable material and elongated in one direction, a small-diameter portion 63b located at one end of the tube 63a and having an outlet, and a bottom lid 63c movably fitted into the tube 63a along the longitudinal direction of the tube 63a for extruding the sealant inside the tube 63a. With the cartridge 63 attached to the mount portion 61, one end 65a of a pushing bar 65 of the extruding mechanism 64 is pressed against the bottom lid 63c of the cartridge 63. When the bottom lid 63c is pushed toward the small-diameter portion 63b along the longitudinal direction (arrow X) of the tube 63a from the other end of the tube 63a, the sealant in the tube 63a can be extruded through the outlet.

Each mount portion 61 includes a retaining tube or portion 24c provided on the movable element 24 and an internally threaded portion formed in the inner surface of the hole 24a. In order to attach or detach the cartridge 63 to or from the mount portion 61, the cartridge 63 is moved along its longitudinal direction to insert or withdraw an end of the cartridge 63 toward the small-diameter portion 63b into or from the retaining tube 24c.

The extruding mechanism 64 includes the pushing bars 65 extending in the longitudinal direction of the tube 63a of the cartridge 63, a stepping motor 66 secured to the movable element 24 as a driving source for moving the pushing bars 65, a direct-acting shaft 67 which is linearly moved upon receiving a torque of a shaft of the motor 66 via a rack-pinion mechanism or the like, and a coupling member 68 for coupling an end of the direct-acting shaft 67 to the other ends of the pushing bars 65.

The coupling member 68 acts as a movable member which is detachably attached to the other ends 65b of the pushing bars 65 and is moved along the longitudinal direction of the tube 63a by the direct-acting shaft 67 to push the bottom lids 63c via the pushing bars 65. The coupling member 68 is movable between a first position near the mount portions 61 and a second position distant from the mount portions 61. The first position corresponds to a state where the bottom lid 63c of each cartridge 63 are substantially located in a bottommost position of the tube 63a, and the second position corresponds to a state where the bottom lid 63c of each cartridge 63 not being used and the pushing bars 65 substantially do not strike against each other. The coupling member 68 is formed with recesses 68b facing the mount portions 61, and permanent magnets 69 are fixed at the bottom of the recesses 68b. The other end 65b of each pushing bar 65 includes a magnetic element which interacts with the corresponding permanent magnet 69 so as to create a magnetic attraction between the permanent magnet 69 and the other end 65b. Thus, when the other end 65b of the pushing bar 65 is fitted in the recess 68b, the pushing bar 65 is substantially held in the recess 68b.

Each recess 68b has such a slanted surface that the entrance is wider than the bottom. The pushing bar 65 is detached from the recess 68b as follows. By laying the other end 65a of the pushing bar 65 along the slanted surface, the pushing bar 65 can be moved in a direction normal to an magnetic attraction acting direction, and the other end 65b of the pushing bar 65 can be easily detached from the recess 68b against the magnetic attraction of the permanent magnet 69. When the pushing bar 65 is to be mounted in the recess 68b, the other end 65b of the pushing bar 65 is aligned along the slanted surface to be guided, so that it can be easily concentrically positioned with the recess 68b.

In the feeding mechanism 26, when the stepping motor 66 is driven, the bottom lids 63c of the cartridges 63 are pushed via the direct-acting shaft 67, the coupling member 68 and the pushing bars 65 to move toward the small-diameter portions 63b of the cartridges 63 along the wire direction (longitudinal direction of the cartridges 63). In this way, the sealant is extruded into the holes 24a of the movable element 24 from the cartridges 63. Normally, since the feeding paths 60 are filled with the sealant already fed, the sealant in the feeding paths 60 is pushed and discharged from the nozzles 22 as being extruded into the hole 24a from the cartridges 63. Further, the stepping motor 66 is driven at a predetermined rotational speed, which is so set as to correspond to or yield a discharged amount of the sealant per unit time (discharging speed). Even though description of a preferred embodiment was made with respect to an apparatus having two cartridges 63, it should be understood that also one single cartridge 63 may be provided in the apparatus for providing or feeding the material, in particular the sealant to the discharge nozzles 22, wherein a suitable branching or interconnection (material path branch or splitter) is provided between the single cartridge 63 and the nozzles 22 so as to feed the material, in particular the sealant to the nozzles 22. In case only one single cartridge is provided, the overall dimensions and/or weight can be reduced thereby improving the operability. Moreover, only one single actuating mechanism, such as the pushing bar 65 is needed for the single cartridge 63.

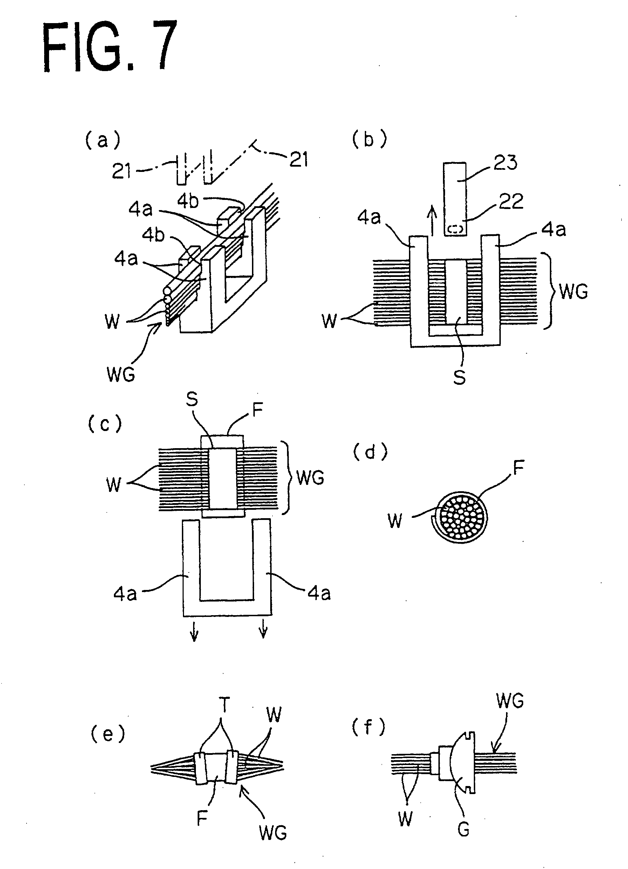

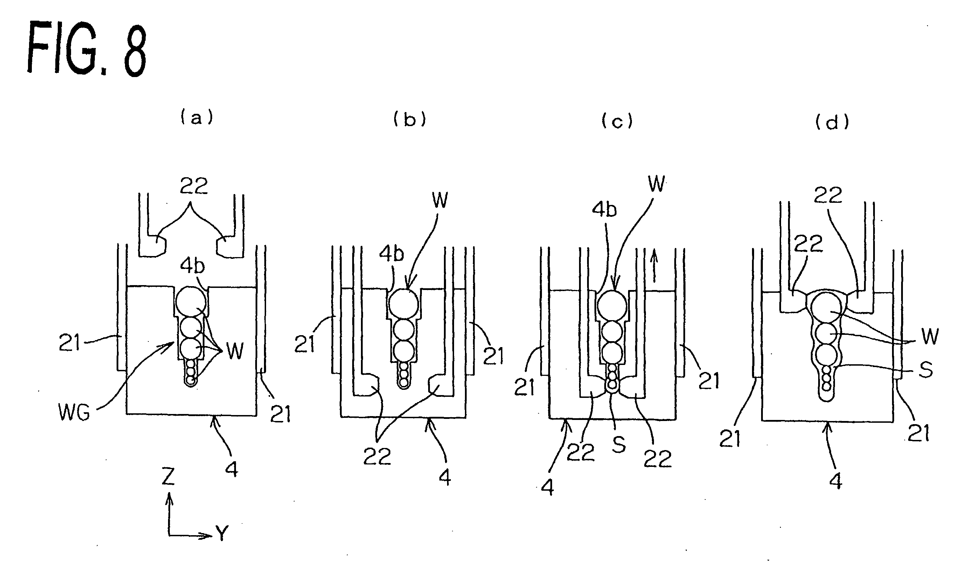

Next, with reference to FIGS. 7 and 8, a waterproofing method as a preferred embodiment of the invention is described.

First, as shown in FIG. 7(a), the respective wires W of the wire group WG are introduced into the grooves 4b of the holder 4 to substantially align them in a line. At this time, as shown in FIG. 3, the wires W are aligned such that the thinner wires are located at the bottom side and thicker wires are located at the entrance side of the grooves 4b.

As shown in FIG. 8(a), the positioning members 21 of the main unit 2 are fitted into the holder 4 to position the wire group WG and the main unit 2 with respect to each other.

Next, as shown in FIG. 8(b), in the main unit 2, the nozzles 22 are spaced widest apart by the relatively moving mechanism 25, and the leading ends of the arm 23 are caused to project through the opening 20a by the moving mechanism 27 to locate the nozzles 22 at a position substantially facing the wire located at the bottom of the grooves 4b.

Then, as shown in FIG. 8(c), in the main unit 2, the spacing between the nozzles 22 is narrowed by the relatively moving mechanism 25 to bring the nozzles 22 at least partly into contact with the wires W. Accordingly, the wires W are positioned and/or at least partly held between portions of the nozzles 22. Subsequently, the feeding mechanism 26 causes the pair of nozzles 22 to discharge the sealant S or other material. Synchronously, the nozzles 22 are moved in the application direction by the moving mechanism 27.

The pair of nozzles 22 apply the sealant S from the opposite sides of the aligned wires W in such a manner as to fill the sealant S into clearances between the wires W and/or to at least partly coat outer portions of the wires with the sealant S.

As the pair of nozzles 22 are moved in the application direction Z by the moving mechanism 27, the guide portions 22b of the nozzles 22 move along the wires W, thereby guiding the discharging openings 22a according to the diameters of the wires W. The nozzles 22 are preferably moved in the application direction at a predetermined constant speed, and a specified amount of the sealant S is discharged from the nozzles 22 by the feeding mechanism 26 at a corresponding constant speed. In this way, the sealant or other material is uniformly applied in the application or waterproofing area.

The feeding mechanism 26 is stopped when the nozzles 22 reach the end of the aligned wires W as shown in FIG. 8(d), thereby completing the application of the sealant S.

As a result, the sealant S is entirely applied to the opposite sides of the wires W of the wire group WG in the waterproofing area as shown in FIG. 7(b).

The holder 4 is lowered as shown in FIG. 7(c) to take the wire group WG to which the sealant S was applied out of the grooves 4b to release the wire group WG.

As shown in FIG. 7(d), a portion of the wire group WG to which the sealant S was applied is or can be preferably wrapped around by a resin sheet F, and then the wire group WG is rearranged in the sheet F so as to have a circular cross section.

Tapes T are or can be wound substantially around the outer surface of the sheet F as shown in FIG. 7(e) in order to hold the cross section of the wire group WG circular and prevent a leakage of the applied sealant S.

Thereafter, a grommet G is or can be introduced to and mounted on the waterproofing area of the wire group WG as shown in FIG. 7(f).

According to this embodiment, the sealant S can be simultaneously applied to the opposite sides of the waterproofing area extending over a plurality of wires W while penetrating between the wires W by moving the pair of nozzles 22 along the wire alignment direction by the moving mechanism 27 and the relatively moving mechanism 25 while causing the sealant S to be discharged from the nozzles 22 by the feeding mechanism 26. Since such a waterproofing treatment is applied when the wire assembly is manufactured, the waterproofing process can be simplified and speeded up.

Particularly, the relatively moving mechanism 25 can adjust the spacing between the pair of nozzles 22 to values corresponding to the diameters of the wires W. This enables the clearances between the nozzles and the respective wires W when the nozzles 22 are moved along the alignment of the wires W to vary to a smaller degree. As a result, the sealant S can be uniformly applied to the entire opposite sides of the wire group WG in a uniform thickness. Further, wire groups made of wires having different diameters can be coped with.

Since the nozzles 22 can approach the respective wires W, the clearances between the nozzles 22 and the respective wires W can be reduced to a substantially minimum distance necessary for waterproofing, with the result that a sealant consumption can be reduced.

The constructions of the moving mechanism 27, the relatively moving mechanism 25 and the feeding mechanism 26 for realizing the above action and effects are not limited to the above ones. For instance, the following above waterproofing method may be carried out using other known constructions. Specifically, according to the waterproofing method, when the sealant is applied to the wire group of the wire assembly, the sealant may be applied by moving the pair of nozzles 22 opposed to each other at the opposite sides of the aligned wires of the wire group along the wire alignment direction while changing the spacing therebetween according to the diameters of the wires.

Since the pair of nozzles 22 hold the wires from the opposite sides by means of the moving mechanism 27 and the relatively moving mechanism 25, they can easily and securely adjust the above clearances to minimum values even for flexible wires and the applicator 1 is allowed to have a simple construction. Here, holding of the wires by the nozzles includes holding of the wires with the sealant provided between the nozzles and the wires.

Further, since the wires are preferably substantially aligned according to their diameters, the nozzles 22 are easily accessible to the respective wires. This is because, if a thinner wire is aligned between thicker wires, it may be difficult for the nozzles 22 to approach this thinner wire. Accordingly, a variation of the above clearances between the nozzles 22 and the wires can be reduced, which is preferable to uniformly apply the sealant. Here, the alignment according to the diameters of the wires includes, for example, an alignment of wires having only slightly different diameters regardless of their diameters in addition to an alignment of wires from the thickest one to the thinnest one.

The plurality of aligned wires can be easily positioned in the holder 4 since being aligned according to the diameters thereof. If the wires are positioned, the clearances between the wires and the nozzles 22 can be securely reduced. Further, since positioning can be easily performed, it is preferable to simplify and speed up the waterproofing treatment.

The sealant applicator according to this embodiment is provided with a controller 6 (see FIG. 6) for controlling the aforementioned parts.

The controller 6 includes, for example, a microcomputer (CPU), and controls the respective parts in accordance with a program set beforehand. A valve (not shown) for actuating the air-pressure actuators 52 of the relatively moving mechanism 25, the stepping motor 66, the motor 71 of the moving mechanism 27, etc. are connected to the CPU via driving circuits. An input device 7 such as an operation key unit for inputting a kind (for example, an article number of the wire assembly, etc.) of the wire group held by the holder 4 is connected to the CPU. In accordance with an information inputted from the input device 7, the CPU sets a moving speed and a moving distance of the nozzles 22 by the moving mechanism 27 and a discharging speed and a discharging timing of the sealant from the nozzles 22 by the feeding mechanism 26 to apply the sealant to the wire group held by the holder 4, and causes the above parts to operate based on the set values.

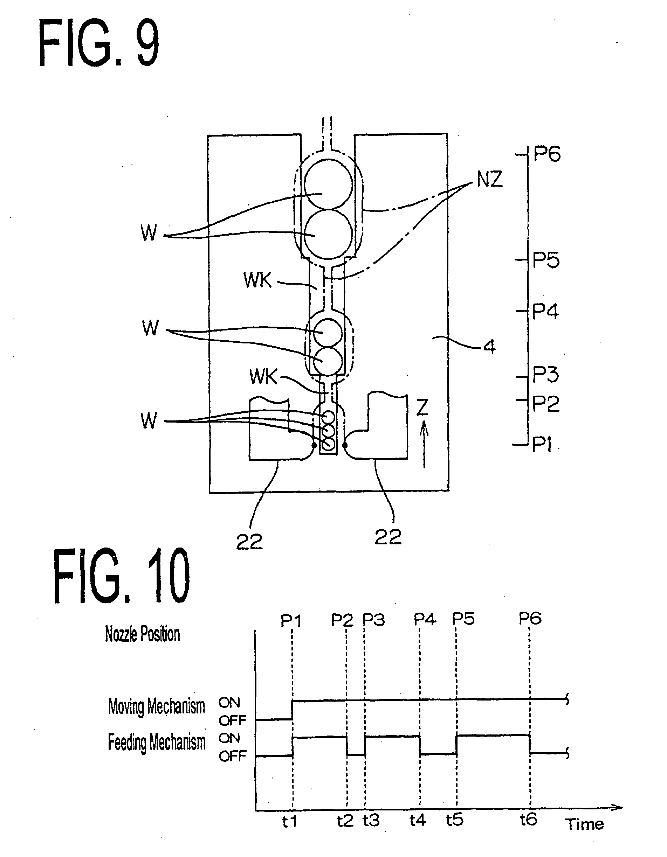

Under such a control of the controller 6, if there are clearances between the wires of the wire group (two clearances WK are shown in FIG. 9), the pair of nozzles 22 stop the discharge of the sealant at predetermined timings according to the clearances between the wires of the wire group while being moved along the wire alignment direction by the moving mechanism 27.

Next, reference is made to FIG. 9 and a timing chart of FIG. 10. Here, operations corresponding to FIGS. 8(c) and 8(d) are described. In FIGS. 9 and 10, the positions of the nozzles 22 along the wire alignment direction Z are shown by P1 to P6.

The controller 6 prejudges whether or not there is any clearance between the wires when the wire group WG is held by the holder 4 based on the information from the input device 7.

When the pair of nozzles 22 are located to face the bottom end of the wire group and the spacing therebetween is narrowed (state shown in FIG. 9), the discharge of the sealant is started by the feeding mechanism 26. Simultaneously, the moving mechanism 27 starts moving the nozzles 22 along the alignment direction Z of the wires W of the wire group WG at a constant speed (timing t1, position P1).

Upon the lapse of a predetermined time following the start of the movement, thereby reaching timing t2, the nozzles 22 reach an area where the lower clearance WK between the wires and the controller 6 stops the discharge of the sealant (position P2). The both nozzles 22 are similarly moved along the wire alignment direction by the moving mechanism 27, so that they move closer to each other when reaching the clearance WK (traces of movement NZ of the nozzles 22 are shown in FIG. 9).

Upon reaching timing t3, the nozzles 22 face the wire W and the discharge of the sealant S is resumed (position P3). Hereafter, similarly, the discharge or application of the sealant S is stopped while the nozzles 22 are located in the area where there is a clearance WK between the wires W, and the sealant S is discharged while the nozzles 22 face the wire W.

In the case that there are some clearances WK between a plurality of aligned wires W, the discharge of the sealant S can be stopped or reduced while the nozzles 22 face the clearance WK. As a result, a wasteful consumption of the sealant S which could be discharged at the clearances WK can be prevented, thereby reducing an amount of the sealant S used.

Further, since the pair of nozzles 22 are closer to each other at the clearance WK, the sealant S can be securely applied to wires W adjacent to the clearance WK at a short distance.

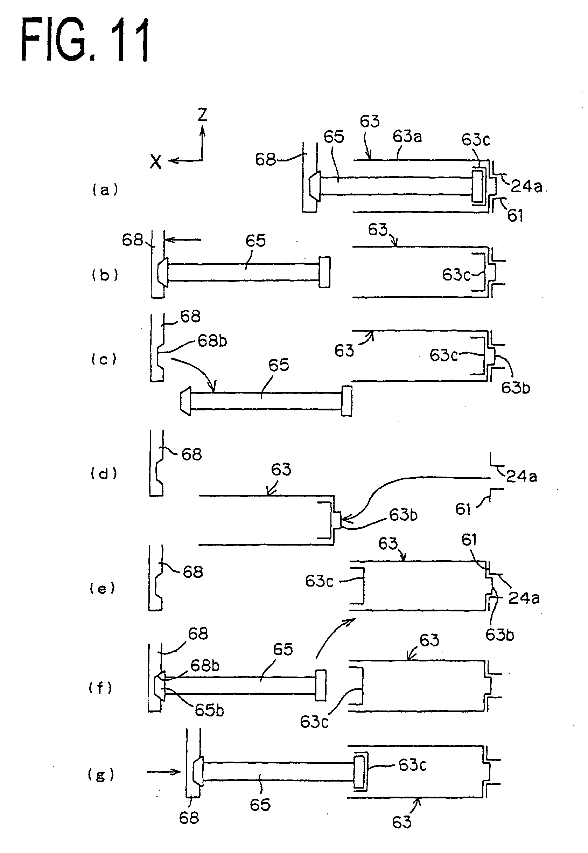

Next, with reference to FIG. 11, an exchange of the cartridge 63 emptied by using up the sealant S by a new cartridge 63 filled with the sealant S is described. Although only one cartridge 63 is described below, a pair of cartridges 63 are or may be used in the sealant applicator 1 according to this embodiment and are simultaneously exchanged.

First, the emptied cartridge 63 is detached from the mount portion 61 (see FIG. 11(a)). Specifically, the coupling member 68 is moved from the first position to the second position as shown in FIG. 11(b), and the pushing bar 65 is detached from the recess 68b of the coupling member 68. At this time, even if the one end 65a of the pushing bar 65 is located in the tube 63a of the cartridge 63, the pushing bar 65 can be easily taken out by laying the other end 65b of the pushing bar 65 along the slanted surface. With the pushing bar 65 detached, the small-diameter portion 63b of the cartridge 63 is detached from the mount portion 61 as shown in FIG. 11(d). Then, this cartridge 63 is moved along its longitudinal direction to be taken out in a space between the cartridge 63 and the coupling member 68 permitting the attachment and detachment.

Next, a new cartridge 63 is prepared. Specifically, a seal film for sealing an outlet of the cartridge 63 is removed, and then the bottom lid 63c of the cartridge 63 is positioned in a specified position in the tube 63a. At this time, the bottom lid 63c is slightly pushed to discharge a tiny amount of the sealant from the outlet of the cartridge 63. This discharged sealant is shaped to have an even surface at the outlet. This is done in order to prevent air from being located between the outlet and the sealant already in the hole 24a when the cartridge 63 is attached to the mount portion 61.

The cartridge 63 thus prepared is attached. The small-diameter portion 63b of the prepared cartridge 63 is so located as to face the mount portion 61 in the above space permitting the attachment and detachment of the cartridge 63, and then the cartridge 63 is moved toward the mount portion 61 along its longitudinal direction to be mounted.

If the pushing bar 65 is arranged in the recess 68b of the coupling member 68 as shown in FIG. 11(f) after the cartridge 63 is attached, the pushing bar 65 is held in the recess 68b by the magnetic attraction of the permanent magnet 69. The coupling member 68 is moved toward the mount portion 61 to bring the pushing bar 65 into contact with the bottom lid 63c of the cartridge 63. Further, if the coupling member 68 is moved in the same direction until the sealant is discharged from the nozzles 22 as shown in FIG. 11(g), the exchange of the cartridge 63 is completed, allowing an applying operation to be resumed.

Since the pushing bar 65 is or can be detached from the coupling member 68 when the cartridge 63 is attached or detached, the cartridge 63 can be easily attached and detached without being interfered by the pushing bar 65.

Further, by detaching the pushing bar 65 when the cartridge 63 is to be attached or detached, the space for installing the pushing bar 65 can be used for attaching and detaching the cartridge 63, enabling the moving distance of the coupling member 68 to be shortened. As a result, not only the feeding mechanism 26, but also the sealant applicator 1 can be made smaller.

Further, by utilizing the magnetic attraction of the permanent magnet 69 to hold the pushing bar 65, the pushing bar 65 can be easily attached and detached only by arranging the other end 65b of the pushing bar 65 at the coupling member 68.

Although the sealant is uniformly applied in the waterproofing or application area in the foregoing embodiment, an applied amount of the sealant may be locally differred. For instance, the applied amount of the sealant may be increased in a portion where the thicker wires are aligned. This may be realized by slowing down the moving speed of the nozzles 22 and/or by increasing the discharging speed of the sealant.

Accordingly, since the pair of nozzles are moved in the wire alignment direction while the spacing therebetween is adjusted according to the diameters of the wires, wire groups made of wires having different diameters can be coped with and the sealant can be uniformly applied. Further, such a construction is preferable to simplify and speed up the waterproofing treatment.

Moreover, these effects can be obtained for the aligned wires.

Furthermore, the sealant applicator is allowed to have a simple construction and is applicable to flexible wires since it comprises the pair of nozzles for holding the wires in contact therewith. Further, the sealant can be securely and uniformly applied by aligning the wires in the order of their diameters.

Preferably, if there is a clearance between the plurality of aligned wires, a wasteful consumption of the sealant which could have been discharged at the clearance can be prevented, thereby reducing an amount of the sealant used.

Advantageously, by detaching the pushing bar for pushing the bottom lid of the cartridge and the movable member for moving the pushing bar, the cartridge can be easily attached and detached without being interfered by the pushing bar. Further, the pushing bar can also easily be attached and detached by utilizing the magnetic attraction of the permanent magnet for holding the pushing bar by the movable member.

### LIST OF REFERENCE NUMERALS

- 1: sealant applicator
- 22: nozzle
- 25: relatively moving mechanism
- 26: feeding mechanism
- 27: moving mechanism
- 61: mount portion
- 63: cartridge
- 63a: tube
- 63b: small-diameter portion (outlet)
- 65: pushing bar
- 65a: one end
- 65b: other end
- 68: coupling member (movable member)
- 69: permanent magnet
- F: film
- G: grommet
- S: sealant
- W: wire
- WG: wire group
- WK: clearance
- X: wire direction
- Y: longitudinal direction of the cartridge
- Z: application direction (wire alignment direction)

## Claims

1. An application method for applying a material, in particular a sealant (S) having a specified viscosity to wires (W) of a wire assembly, comprising the steps of:
aligning portions of wires (W) of a wire group (WG) substantially in a wire aligning direction (Z);
substantially opposing a pair of nozzles (22) for discharging the material (S) to each other to hold or position the substantially aligned wire group (WG) therebetween, and
moving the nozzles in the wire alignment direction (Z) while changing a spacing between the pair of nozzles (22) according to the diameters of the wires (W) so as to cause the material (S) to coat and/or penetrate between the wires (W).

2. An application method according to claim 1, wherein in the aligning step the wires (W) are aligned according to their diameter such that the diameter thereof increases in the wire alignment direction (Z).

3. An application method according to one or more of the preceding claims, wherein when the nozzles (22) reach a position along the wire alignment direction (Z) corresponding to a clearance (WK) between adjacent wires (W), the spacing of the nozzles (22) is reduced in the moving step and/or the discharging of the material (S) is reduced, preferably stopped.

4. An application method according to one or more of the preceding claims, wherein the discharge amount of the material (S) is changed by increasing/decreasing
the moving speed of the nozzles (22) along the wire alignment direction (Z) and/or
the discharging speed of the material (S).

5. An application method according to one or more of the preceding claims, wherein the method is used as a waterproofing method for a wire assembly to be introduced into a grommet (G), wherein during the manufacturing of the wire assembly, a sealant (S) having a specified viscosity is applied to a wire group (WG) obtained by substantially aligning a plurality of wires (W) forming the wire assembly substantially side-by-side, a portion of the wire group (WG) to which the sealant (S) is applied is wrapped around by a film (F) in such a manner that the wrapped wire group (WG) has a substantially circular cross section and taping (T) is at least partly applied to the outer surface of the film (F).

6. An applicator for an application method according to one or more of the preceding claims, comprising;
a pair of nozzles (22) which are or can be substantially opposed to each other at the opposite sides of a holder (4) for holding or positioning a wire group (WG) obtained by substantially aligning portions of a plurality of wires (W) in a wire alignment direction (Z), the nozzles (22) being provided for discharging a material (S), in particular a sealant (S) having a specified viscosity,
a moving mechanism (27) for moving the pair of nozzles (22) in the wire alignment direction (Z),
a feeding mechanism (26) for feeding the material (S) to the nozzles (22) such that a specified amount of the material (S) is discharged from the nozzles (22), and
a relatively moving means (25) for moving the nozzles (22) toward and away from each other or relative to each other such that the spacing between the pair of nozzles (22) corresponds to the diameter of the wire(s) (W) held therebetween.

7. An applicator according to claim 6, wherein the holder (4) is formed such that the plurality of the wires (W) are aligned substantially in the order of their diameters in the wire group (W) and preferably that the wires (W) having the smallest diameter are arrangeable.at the bottommost position as seen in a direction of insertion of the wires (W) into the holder (4).

8. An applicator according to claim 6 or 7, wherein the pair of nozzles (22) are moved while tightly holding the wire(s) (W) arranged in the holder (4) therebetween.

9. An applicator according to one or more of the preceding claims 6 to 8, wherein the pair of nozzles (22) are controlled such that they stop discharging the material (S) at a predetermined timing (t2; t4) corresponding to a clearance (WK) between the wires (W) of the wire group (WG) while being moved along the wire alignment direction (Z) by the moving mechanism (27).

10. An applicator according to one or more of the preceding claims 6 to 9, wherein the feeding mechanism (26) comprises:
at least one cartridge (63) including a tube (63a) containing the material (S) as a supply source of the material (S), an outlet (63b) provided at one end of the tube (63) for discharging the material (S) therethrough, and a bottom lid (63c) which is movable inside the tube (63a) substantially along the longitudinal direction of the tube (63a) when being pushed from the other end of the tube (63a) to discharge the material (S),
a mount portion (61) to and from which one end of the cartridge (63) is attached and detached by moving the cartridge (63) preferably substantially along its longitudinal direction,
a pushing bar (65) one end (65a) of which can come into contact with the bottom lid (63c) of the cartridge (63) attached to the mount portion (61),
a movable member (68) which is attachable and detachable to and from the other end of the pushing bar (65) and is movable substantially along the longitudinal direction of the cartridge (63), and preferably
a permanent magnet (69) for creating such a magnetic attraction as to hold the other end (65b) of the pushing bar (65) in or on the movable member (68).

## Patentansprüche

1. Auftragungsverfahren zum Auftragen bzw. Aufbringen eines Materials, insbesondere eines Dichtmittels (S), welches eine bestimmte Viskosität aufweist, auf Drähte (W) einer Verkabelung bzw. eines Kabelbaums, umfassend die Schritte:
Ausrichten von Abschnitten von Drähten (W) einer Drahtgruppe (WG) im wesentlichen in einer Drahtausrichtungsrichtung (Z);
im wesentlichen zueinander gegenüberliegendes Anordnen eines Paars von Düsen (22) zum Ausbringen des Materials (S), um die im wesentlichen ausgerichtete Drahtgruppe (WG) dazwischen zu halten oder zu positionieren, und
Bewegen der Düsen in der Drahtausrichtungsrichtung (Z), während ein Abstand zwischen dem Paar von Düsen (22) gemäß den Durchmessern der Drähte (W) geändert wird, um zu bewirken, daß das Material (S) die Drähte (W) beschichtet und/oder zwischen diese eindringt.

2. Auftragungsverfahren nach Anspruch 1, wobei in dem Ausrichtungsschritt die Drähte (W) gemäß ihrem Durchmesser so ausgerichtet werden, daß der Durchmesser davon in der Drahtausrichtungsrichtung (Z) ansteigt.

3. Auftragungsverfahren nach einem oder mehreren der vorangehenden Ansprüche, wobei, wenn die Düsen (22) eine Position entlang der Drahtausrichtungsrichtung (Z) entsprechend einem Freiraum (WK) zwischen benachbarten Drähten (W) erreichen, der Abstand der Düsen (22) in dem Bewegungsschritt reduziert wird und/oder das Ausbringen des Materials (S) reduziert, vorzugsweise gestoppt bzw. angehalten wird.

4. Auftragungsverfahren nach einem oder mehreren der vorangehenden Ansprüche, worin die Austrags- bzw. Ausbringmenge des Materials (S) geändert wird durch ein Erhöhen/Verringern
der Bewegungsgeschwindigkeit der Düsen (22) entlang der Drahtausrichtungsrichtung (Z) und/oder
der Austragsgeschwindigkeit des Materials (S).

5. Auftragungsverfahren nach einem oder mehreren der vorangehenden Ansprüche, wobei das Verfahren als ein Verfahren zum Wasserabdichten einer Drahtanordnung verwendet wird, welche in eine Gummi-Durchgangshülle (G) einzubringen ist, wobei während der Herstellung der Drahtanordnung ein Dichtmittel (S), welches eine bestimmte Viskosität aufweist, auf eine Drahtgruppe (WG) aufgebracht wird, welche durch ein im wesentlichen Ausrichten einer Mehrzahl von Drähten (W), welche die Drahtanordnung ausbilden, im wesentlichen nebeneinander erhalten wird, ein Abschnitt der Drahtgruppe (WG), auf welche das Dichtmittel (S) aufgebracht wird, durch einen Film bzw. eine Folie (F) in einer derartigen Weise umhüllt wird, daß die umhüllte bzw. ummantelte Drahtgruppe (WG) einen im wesentlichen kreisförmigen Querschnitt aufweist, und eine Umwicklung (T) wenigstens teilweise auf der oberen Oberfläche des Films (F) aufgebracht wird.

6. Aufbring- bzw. Auftragevorrichtung für ein Auftragungsverfahren gemäß einem oder mehreren der vorangehenden Ansprüche, umfassend:
ein Paar von Düsen (22), welche im wesentlichen einander gegenüberliegend an den gegenüberliegenden Seiten eines Halters (4) zum Halten oder Positionieren einer Drahtgruppe (WG) angeordnet sind oder werden können, welche durch ein im wesentlichen Ausrichten von Abschnitten einer Vielzahl von Drähten (W) in einer Drahtausrichtungsrichtung (Z) erhalten wird, wobei die Düsen (22) für ein Ausbringen eines Materials (S), insbesondere eines Dichtmittels (S) vorgesehen sind, welches eine bestimmte Viskosität aufweist,
einen Bewegungsmechanismus (27) zum Bewegen des Paars von Düsen (22) in der Drahtausrichtungsrichtung (Z),
einen Zufuhrmechanismus (26) zum Zuführen des Materials (S) zu den Düsen (22), so daß eine bestimmte Menge des Materials (S) aus den Düsen (22) ausgebracht wird, und
Relativbewegungsmittel (25) zum Bewegen der Düsen (22) zueinander und weg voneinander oder relativ zueinander, so daß der Abstand zwischen dem Paar von Düsen (22) dem Durchmesser des Drahts (der Drähte) (W) entspricht, welche(r) dazwischen gehalten ist bzw. sind.

7. Auftragevorrichtung nach Anspruch 6, worin der Halter (4) derart ausgebildet ist, daß die Vielzahl von Drähten (W) im wesentlichen in der Reihenfolge ihrer Durchmesser in der Drahtgruppe (W) ausgerichtet ist, und vorzugsweise, daß die Drähte (W), welche den kleinsten Durchmesser aufweisen, an der am weitesten unten liegenden Position in einer Richtung eines Einsetzens der Drähte (W) in den Halter (4) gesehen anordenbar sind.

8. Auftragevorrichtung nach Anspruch 6 oder 7, wobei das Paar von Düsen (22) bewegt ist, während der Draht (die Drähte) (W) festgehalten ist bzw. sind, welche(r) in dem Halter (4) dazwischen angeordnet ist bzw. sind.

9. Auftragevorrichtung nach einem oder mehreren der vorangehenden Ansprüche 6 bis 8, wobei das Paar von Düsen (22) derart geregelt bzw. gesteuert ist, so daß sie ein Ausbringen des Materials (S) zu einem vorbestimmten Zeitpunkt (t2; t4) entsprechend einem Abstand (WK) zwischen den Drähten (W) der Drahtgruppe (WG) anhalten bzw. stoppen, während sie entlang der Drahtausrichtungsrichtung (Z) durch den Bewegungsmechanismus (27) bewegt wird.

10. Auftragevorrichtung nach einem oder mehreren der vorangehenden Ansprüche 6 bis 9, worin der Zufuhrmechanismus (26) umfaßt:
wenigstens eine Patrone (63), beinhaltend ein Rohr (63a), enthaltend das Material (S), als eine Versorgungsquelle des Materials (S), einen Auslaß (63b), welcher an einem Ende des Rohrs (63) für ein Ausbringen des Materials (S) dadurch vorgesehen ist, und einen Bodendeckel (63c), welcher im Inneren des Rohrs (63a) im wesentlichen entlang der Längsrichtung des Rohrs (63a) bewegbar ist, wenn er von dem anderen Ende des Rohrs (63a) zum Ausbringen des Materials (S) gedrückt wird,
einen Montageabschnitt (61), an welchem ein Ende der Patrone (63) festgelegt und von welchem es gelöst ist, indem die Patrone (63) vorzugsweise im wesentlichen entlang seiner Längsrichtung bewegt wird,
eine drückende Stange (65), von welcher ein Ende (65a) in Kontakt mit dem Bodendeckel (63c) der an dem Montageabschnitt (61) festgelegten Patrone (63) gelangen kann,
ein bewegbares Glied (68), welches an dem anderen Ende der drückenden Stange (65) festlegbar und von diesem lösbar ist und im wesentlichen entlang der Längsrichtung der Patrone (63) bewegbar ist, und vorzugsweise
einen Permanentmagnet (69), um eine derartige magnetische Anziehung zu erzeugen, um das andere Ende (65b) der drückenden Stange (65) in oder an dem bewegbaren Glied (68) zu halten.

## Revendications

1. Procédé d'application pour appliquer une matière, en particulier une matière d'étanchéité (S) ayant une viscosité spécifiée à des fils (W) d'un ensemble de fils, comprenant les étapes de :
alignement de portions de fils (W) d'un groupe de fils (WG) sensiblement dans une direction d'alignement des fils (Z) ;
mise sensiblement en opposition de deux buses (22) pour éjecter la matière (S), l'une vers l'autre, afin de maintenir ou de positionner entre elles le groupe de fils sensiblement alignés (WG), et
déplacement des buses dans la direction d'alignement des fils (Z) tout en modifiant un espacement entre les deux buses (22) en fonction des diamètres des fils (W) de façon à ce que la matière (S) revête et/ou pénètre entre les fils (W).

2. Procédé d'application selon la revendication 1, dans lequel, dans l'étape d'alignement, les fils (W) sont alignés en fonction de leur diamètre de sorte que leur diamètre augmente dans la direction d'alignement des fils (Z).

3. Procédé d'application selon une ou plusieurs des revendications précédentes, dans lequel, lorsque les buses (22) atteignent une position, le long de la direction d'alignement des fils (Z), qui correspond à un intervalle (WK) entre fils adjacents (W), l'espacement des buses (22) est réduit, dans l'étape de déplacement, et/ou l'éjection de la matière (S) est réduite, et de préférence arrêtée.

4. Procédé d'application selon une ou plusieurs des revendications précédentes, dans lequel la quantité éjectée de la matière (S) est modifiée par augmentation / diminution de la vitesse de déplacement des buses (22) le long de la direction d'alignement des fils (Z), et/ou de la vitesse d'éjection de la matière (S).

5. Procédé d'application selon une ou plusieurs des revendications précédentes, dans lequel le procédé est utilisé comme un procédé d'étanchéité pour un ensemble de fils à introduire dans une bague de traversée (G), dans lequel, pendant la fabrication de l'ensemble de fils, une matière d'étanchéité (S) ayant une viscosité spécifiée est appliquée à un groupe de fils (WG) obtenu par alignement de façon substantielle d'une pluralité de fils (W) constituant l'ensemble de fils sensiblement côte à côte, une portion du groupe de fils (WG) à laquelle la matière d'étanchéité (S) est appliquée est enveloppée dans un film (F) d'une manière telle que le groupe de fils enveloppés (WG) a une section transversale sensiblement circulaire, et un ruban (T) est au moins en partie appliqué à la surface extérieure du film (F).

6. Applicateur pour un procédé d'application selon une ou plusieurs des revendications précédentes, comprenant :
deux buses (22) qui sont ou peuvent être sensiblement opposées l'une à l'autre, sur les côtés opposés d'un dispositif de maintien (4) pour tenir ou positionner un groupe de fils (WG) obtenu par alignement de façon substantielle de portions d'une pluralité de fils (W) dans une direction d'alignement de fils (Z), les buses (22) étant prévues pour éjecter une matière (S), en particulier une matière d'étanchéité (S) ayant une viscosité spécifiée,
un mécanisme de déplacement (27) pour déplacer les deux buses (22) dans la direction d'alignement des fils (Z),
un mécanisme d'alimentation (26) pour amener la matière (S) aux buses (22) de sorte qu'une quantité spécifiée de la matière (S) soit éjectée des buses (22), et un moyen de déplacement relatif (25) pour rapprocher et éloigner les buses (22) l'une de l'autre ou l'une par rapport à l'autre de sorte que l'espacement entre les deux buses (22) corresponde au diamètre du ou des fils (W) tenus entre elles.

7. Applicateur selon la revendication 6, dans lequel le dispositif de maintien (4) est construit de sorte que la pluralité des fils (W) soient alignés sensiblement dans l'ordre de leurs diamètres dans le groupe de fils (W), et de préférence de sorte que les fils (W) ayant le plus petit diamètre puissent être agencés à la position la plus basse, vus dans une direction d'insertion des fils (W) dans le dispositif de maintien (4).

8. Applicateur selon la revendication 6 ou 7, dans lequel les deux buses (22) sont déplacées pendant que le ou les fils (W) placés entre elles sont fermement tenus dans le dispositif de maintien (4).

9. Applicateur selon une ou plusieurs des revendications précédentes 6 à 8, dans lequel les deux buses (22) sont commandées de sorte qu'elles cessent d'éjecter la matière (S) à un instant prédéterminé (t2, t4) correspondant à un intervalle (WK) entre les fils (W) du groupe de fils (WG), pendant qu'elles sont déplacées le long de la direction d'alignement des fils (Z) par le mécanisme de déplacement (27).

10. Applicateur selon une ou plusieurs des revendications précédentes 6 à 9, dans lequel le mécanisme d'alimentation (26) comprend :
au moins une cartouche (63) incluant un tube (63a) qui contient la matière (S) comme source de fourniture de la matière (S), une sortie (63b) prévue à une extrémité du tube (63) pour éjecter la matière (S) à travers cette sortie, et un couvercle de fond (63c) qui est déplaçable à l'intérieur du tube (63a) sensiblement le long de la direction longitudinale du tube (63a) lorsqu'il est poussé à partir de l'autre extrémité du tube (63a) pour éjecter la matière (S),
une partie de montage (61) à laquelle et de laquelle une extrémité de la cartouche (63) est fixée et détachée par déplacement de la cartouche (63) de préférence sensiblement le long de sa direction longitudinale,
une barre de poussée (65) dont une extrémité (65a) peut venir en contact avec le couvercle de fond (63c) de la cartouche (63) attachée à la partie de montage (61),
un élément mobile (68) qui peut être attaché à l'autre extrémité de la barre de poussée (65) et détaché de celle-ci, et qui est déplaçable sensiblement le long de la direction longitudinale de la cartouche (63), et de préférence
un aimant permanent (69) pour créer une attraction magnétique pouvant maintenir l'autre extrémité (65b) de la barre de poussée (65) dans ou sur l'élément mobile (68).
